# EUROPEAN PATENT SPECIFICATION

(11) **EP 3 067 581 B1**
(45) Date of publication and mention of the grant of the patent: **30.01.2019**
(21) Application number: 14860854.0
(22) Date of filing: 28.10.2014
(51) Int. Cl.: F16C 35/077, F16C 19/06, F16C 35/04, F16C 33/58

(54) **BEARING DEVICE AND METHOD FOR MANUFACTURING BEARING DEVICE**
LAGERVORRICHTUNG UND VERFAHREN ZUR HERSTELLUNG DER LAGERVORRICHTUNG
DISPOSITIF DE PALIER ET PROCÉDÉ DE FABRICATION DE DISPOSITIF DE PALIER

(30) Priority: 08.11.2013 JP 2013232316
(43) Date of publication of application: 14.09.2016
(73) Proprietor: NSK Ltd., Tokyo 141-8560 (JP)
(72) Inventor: ISHIBASHI Yutaka, Fujisawa-shi Kanagawa 251-8501 (JP); KATOUGI Takao, Fujisawa-shi Kanagawa 251-8501 (JP)
(74) Representative: Grünecker Patent- und Rechtsanwälte PartG mbB
(86) International application number: PCT/JP2014/078668
(87) International publication number: WO 2015/068612

(56) References cited:
- WO-A1-2009/132818
- WO-A1-2009/132818
- DE-A1-102004 031 830
- JP-A- S6 142 444
- JP-A- 2001 054 268
- JP-A- 2008 267 585
- JP-A- 2008 267 585

## Description

### TECHNICAL FIELD

The present invention relates to a bearing device and a method for manufacturing the bearing device, and for example, to a bearing device to be used for a rotation support part of a gear in a transmission and a method for manufacturing the bearing device.

### BACKGROUND ART

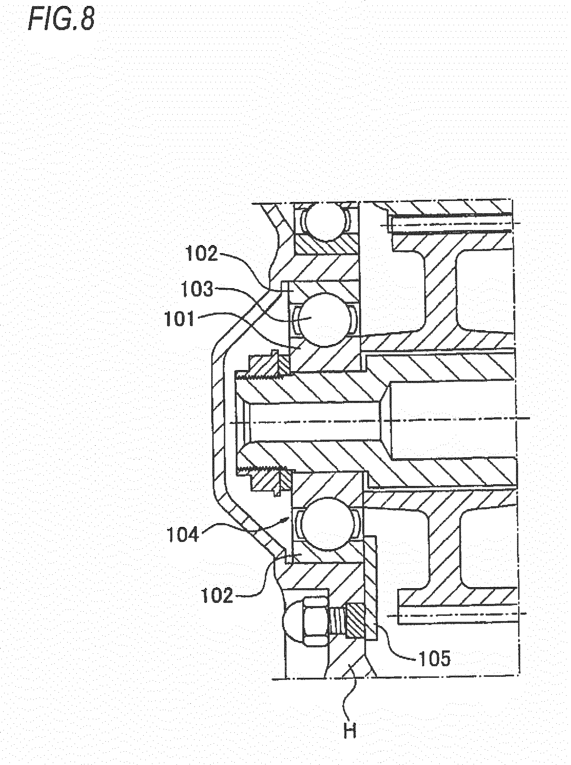

As this kind of bearing device, for example, as shown in FIG. 8, there has been known a bearing device which includes a rolling bearing 104 having a plurality of rolling elements 103 arranged between an inner ring 101 and an outer ring 102, and a retainer plate 105 configured to abut on an axial end face of the outer ring 102 of the rolling bearing 104 to retain the rolling bearing 104 to a housing H.

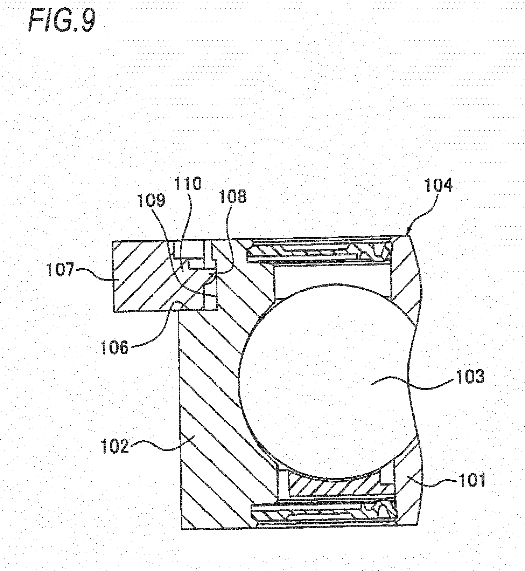

Incidentally, it is demanded to reduce a size of a transmission as well as a size of a vehicle, In order to meet this demand, as shown in FIG. 9, there has been known a bearing device in which a small-diameter step portion 106 is provided at an axial end portion of an outer peripheral surface of the outer ring 102 of the rolling bearing 104, and a circular hole 110 of a retainer plate 107 is fitted to the small-diameter step portion 106. The retainer plate 107 has an engagement part 108 formed by a pressing process of making a material of a peripheral edge portion of the circular hole 110 of the retainer plate protrude radially inward, and the engagement part 108 is engaged to an engagement groove 109 formed at the small-diameter step portion 106.

Conventionally, as a method of coupling the retainer plate 107 and the bearing 104, there have been suggested various methods of engaging the engagement part, which is formed by the pressing process of making the peripheral edge portion of the circular hole of the retainer plate protrude radially inward, to the engagement groove formed at the small-diameter
step portion (for example, refer to Patent Documents 1 to8). JP2008 267 585 A shows the preamble of claims 1 and 3.

### PRIOR ART DOCUMENT

### PATENT DOCUMENTS

Patent Document 1: Japanese Patent No. 4,752,817B
Patent Document 2: German Patent Application Publication No. 102004031830A
Patent Document 3: Japanese Patent Application Publication No. 2004-028123A
Patent Document 4: Japanese Patent Application Publication No. 2013-29148A
Patent Document 5: Japanese Patent No. 4,877,135B
Patent Document 6: Japanese Patent No. 5,146,579B
Patent Document 7: Japanese Patent Application Publication No. 2013-137071A
Patent Document 8: International Publication No. WO2009/132818

### SUMMARY OF THE INVENTION

### PROBLEMS TO BE SOLVED

The conventional pressing process of the engagement part 108 has advantages that the number of processing processes is smaller and it is lower in cost. However, the simplicity of the process causes disadvantages that punch precision and component precision would affect control of protruding amounts (inscribed circular shape) of a plurality of engagement parts, and it is difficult to perform the control in view of assembling ability and interference with the bearing. Specifically, a positive gap exists between a bearing ring and the retainer plate, so that it is difficult to form the projection by the pressing process with a center of a bearing ring guide inner diameter and a center of a retainer plate guide diameter being completely matched. For example, it is difficult to make protruding amounts of three engagement parts equal.

Patent Document 8 discloses processes of exceeding over a caught portion of an outer ring and removing a protrusion with a first pressing and providing a projection with a second pressing. However, since the projection is formed by the pressing process, it is not easy to implement a stable shape of the projection.

In view of the above, it is an object of the present invention to provide a bearing device in which stable protruding amounts of engagement parts are implemented even though a pressing process is adopted, and an outer ring and a retainer plate have a non-separation structure and can rotate relative to each other while avoiding interference therebetween, and a method for manufacturing the bearing device.

### MEANS FOR SOLVING THE PROBLEM

The above object is achieved by the following.(1) A method for manufacturing a bearing device which includes a rolling bearing having a plurality of rolling elements arranged between an inner ring and an outer ring, and a retainer plate configured to retain the rolling bearing to a housing and having a circular hole to be fitted to an outer peripheral surface of the outer ring of the rolling bearing, wherein an outer periphery of an axial end portion of the outer ring is provided with a small-diameter step portion to be fitted with the retainer plate, an engagement groove extending in a circumferential direction is formed in an outer peripheral surface of the small-diameter step portion, a groove depth of the engagement groove with respect to the outer peripheral surface of the small-diameter step portion is constant over the entire circumference, and the circular hole of the retainer plate is provided with a plurality of engagement parts protruding radially inward to be engaged to the engagement groove, the method comprising:a formation process including arranging the circular hole of the retainer plate around the small-diameter step portion of the outer ring, pushing the retainer plate in a radial direction towards the small-diameter step portion of the outer ring at a circumferential position where one of the plurality of engagement parts is to be formed,
characterized in that the plurality of engagement parts are formed sequentially, the retainer plate is pushed towards the small-diameter step portion of the outer ring in a state, in which a center of the retainer plate and a center of the outer ring are eccentric with each other, when the retainer plate is pushed towards the small-diameter step portion of the outer ring a gap along a radial direction between an inner peripheral surface of the retainer plate and an outer peripheral surface of the small-diameter step portion at the position where the one of the plurality of engagement parts is to be formed disappears, and at a time when the retainer plate is pushed towards the outer ring in a radial direction, a peripheral edge portion of the circular hole of the retainer plate is pressed with a punch in an axial direction to form the one of the engagement parts, such that a tip of the engagement part is in contact with the engagement groove.
(2) The method for manufacturing the bearing device according to
(1), wherein an inner peripheral surface of the circular hole is formed with a recess portion extending over both circumferential sides of the circumferential position where each engagement part is formed.(3) A bearing device comprising:a rolling bearing including a plurality of rolling elements arranged between an inner ring and an outer ring; anda retainer plate configured to retain the rolling bearing to a housing and having a circular hole to be fitted to an outer peripheral surface of the outer ring of the rolling bearing, wherein an outer periphery of an axial end portion of the outer ring is provided with a small-diameter step portion to be fitted with the retainer plate,wherein an engagement groove extending in a circumferential direction is formed in an outer peripheral
surface of the small-diameter step portion, wherein a groove depth of the engagement groove with respect to the outer peripheral surface of the small-diameter step portion is constant over the entire circumference,
wherein the circular hole of the retainer plate is provided with a plurality of engagement parts protruding radially inward and to be engaged to the engagement groove, and wherein gaps along a radial direction between the plurality of engagement parts and the engagement groove are respectively equal in size to a gap along the radial direction between an inner peripheral surface of the circular hole of the retainer plate and the outer peripheral surface of the small-diameter step portion,
characterized in that a center of the inner peripheral surface of the circular hole and a center of an inscribed circle of each engagement part coincide with each other.

### EFFECTS OF THE INVENTION

According to the present invention, the circular hole of the retainer plate is arranged around the small-diameter step portion of the outer ring, and at the state where the retainer plate is radially pushed towards the outer ring at the circumferential position where the one of the plurality of engagement parts is to be formed, the circular hole of the retainer plate is pressed with the punch to form one of the engagement parts such that the tip of the engagement part is contacted to the engagement groove, and the formation of the engagement part is sequentially performed for all the engagement parts.

Accordingly, the gaps along the radial direction between the plurality of engagement parts and the engagement groove are respectively equal in size to the gap along the radial direction between the inner peripheral surface of the retainer plate and the outer peripheral surface of the small-diameter step portion. Therefore, the retainer plate can rotate relative to the outer ring, a damage of the engagement parts can be prevented, and the engagement between the small-diameter step portion and the engagement parts is maximized, i.e., protruding amounts of the engagement parts are maximized, so that the retainer plate and the outer ring can be securely prevented from being separated. Also, the assembly precision between the retainer plate and the outer ring becomes high, an inner diameter shape of the retainer plate can be obtained at lower cost and the efficiency of the assembling operation of the bearing device can be increased to improve the productivity.

### BRIEF DESCRIPTION OF THE DRAWINGS

FIG. 1 is a perspective view showing a bearing device according to an embodiment of the present invention.
FIG. 2 is a front view of the bearing device shown in FIG. 1.
FIG. 3 is a sectional view taken along a line III-III.
FIG. 4A is an enlarged sectional view of a part IV of FIG. 3, and FIG. 4B is an enlarged sectional view of a part IV'.
FIG. 5 is a perspective view of a retainer plate of the bearing device.
FIG. 6A is a front view showing a state where the retainer plate is radially pushed towards an outer ring at a position where an engagement part is to be formed, and FIG. 6B is a main enlarged view of FIG. 6A.
FIG. 7A is a main sectional view of a part of the bearing device which is subjected to a pressing process with a punch, FIG. 7B is a main sectional view showing a state where the engagement part is pressed until a tip thereof is contacted to an engagement groove, and FIG. 7C is a main sectional view showing a state where the tip of the engagement part is pressed by excessively pressing the punch.
FIG. 8 is a main sectional view showing a conventional bearing device.
FIG. 9 is a main sectional view showing another conventional bearing device.

### DETAILED DESCRIPTION OF EMBODIMENTS

Hereinafter, a bearing device according to an embodiment of the present invention will be described in detail with reference to the drawings.

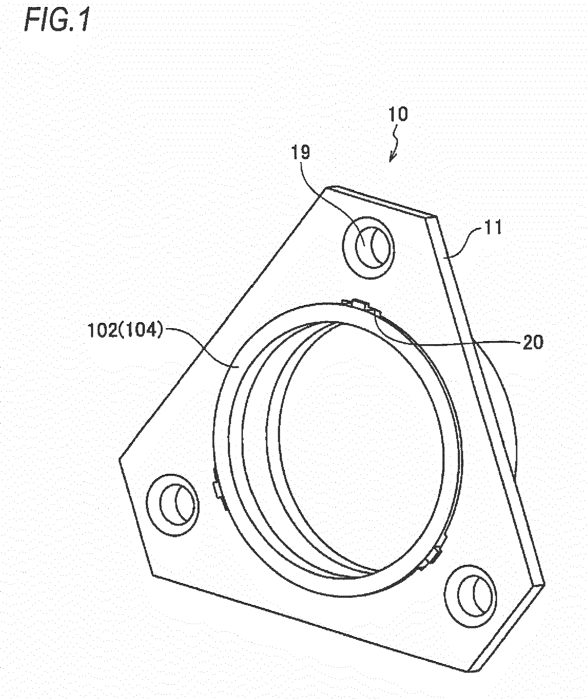

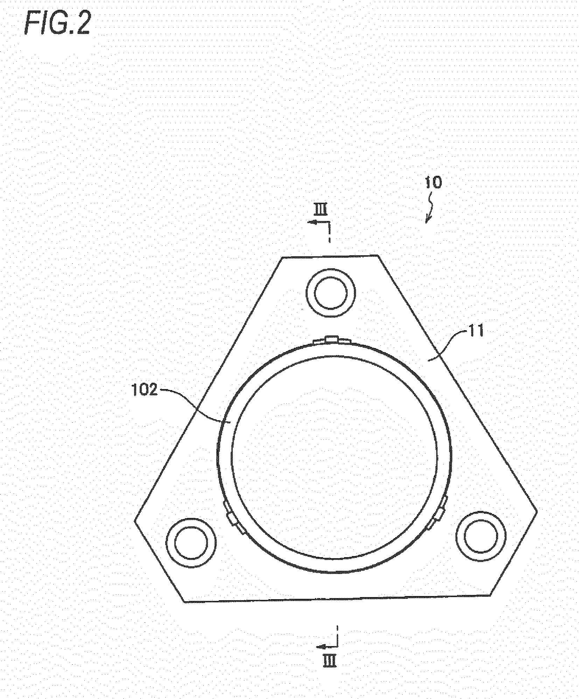

A bearing device 10 of the embodiment shown in FIGS. 1 to 5 is used for a rotation support part of a gear in a transmission, for example. The bearing device 10 includes a rolling bearing 104 having a plurality of rolling elements 103 arranged between an inner ring 101 and an outer ring 102, and a retainer plate II configured to retain the rolling bearing 104 to a housing H and having a circular hole 13 to be fitted to an outer peripheral surface of the outer ring 102 of the rolling bearing 104 (refer to FIGS. 8 and 9). In the meantime, in the present invention, a structure of the retainer plate 11 is mainly different from the conventional structure. Therefore, in the below, the retainer plate 11 and the outer ring 102 of the rolling bearing 104 to which the retainer plate is to be assembled will be mainly described.

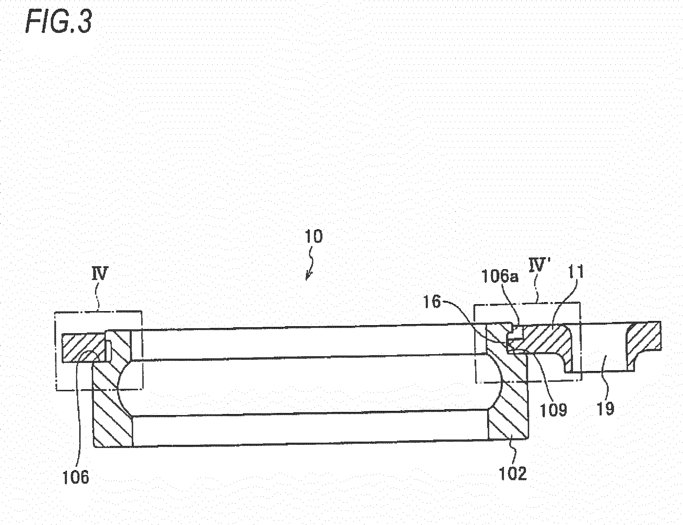

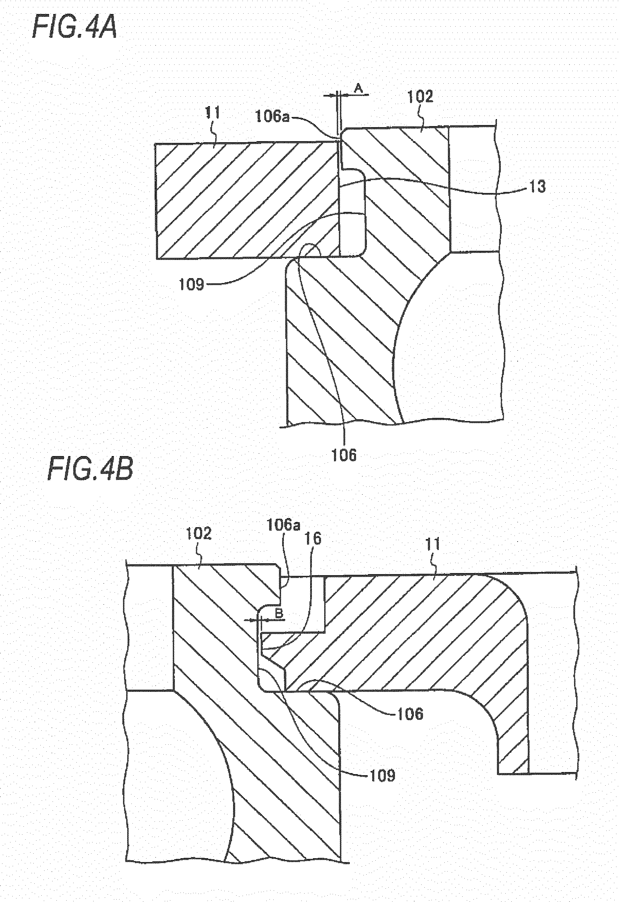

As shown in FIGS. 3 and 4, an outer periphery of an axial end portion of the outer ring 102 is formed with a small-diameter step portion 106 to be fitted with the retainer plate 11, an engagement groove 109 is formed at an axially inner side of an outer peripheral surface of the small-diameter step portion 106 along an entire circumference. A groove depth of the engagement groove 109 with respect to the outer peripheral surface 106a of the small-diameter step portion 106 is constant over the entire circumference.

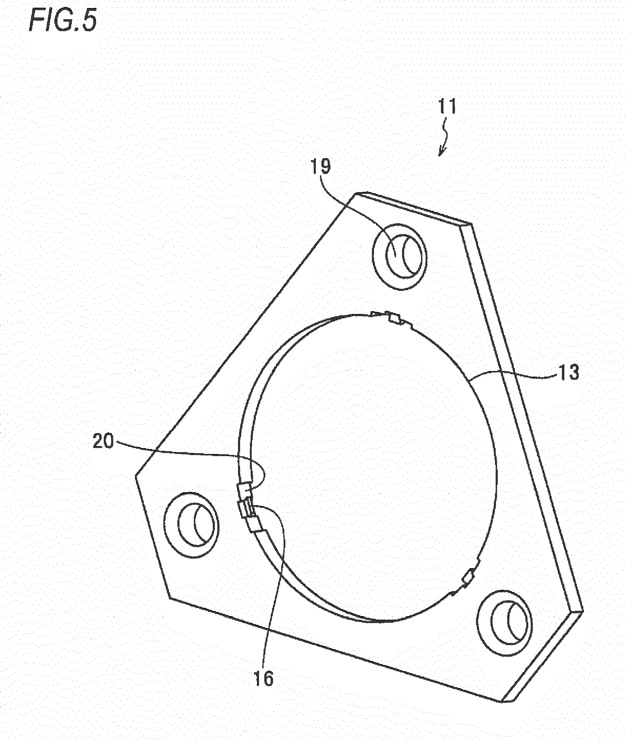

As shown in FIG. 5, the retainer plate II has the circular hole 13 at a center, an outward appearance has a substantially triangular flange shape, and three apexes of the triangular shape are formed with insertion holes 19 for bolts (not shown).

As shown in FIGS. 3 to 5, an inner periphery of the circular hole 13 of the retainer plate 11 is formed with engagement parts 16 protruding radially inward and to be engaged to the engagement groove 109 formed in the small-diameter step portion 106 of the outer ring 102. In the embodiment, the engagement parts 16 are formed at substantially equal circumferential intervals at three places, and the three engagement parts 16 are arranged at the three apexes-side of the triangular shape of the retainer plate 11. The inner peripheral surface of the circular hole 13 is formed with a plurality of recess portions 20 at positions where a punch 17 (which will be described later) is to be pressed, to extend over both circumferential sides of the circumferential position where each engagement part is formed.

Gaps B along the radial direction between the three engagement parts 16 and the engagement groove 109 are respectively equal in size to a gap A along the radial direction between the inner peripheral surface of the circular hole 13 of the retainer plate 11 and the outer peripheral surface 106a of the small-diameter step portion 106 (A=B), and a center of the inner peripheral surface of the circular hole 13 and a center of an inscribed circle of each engagement part 16 coincide with each other.

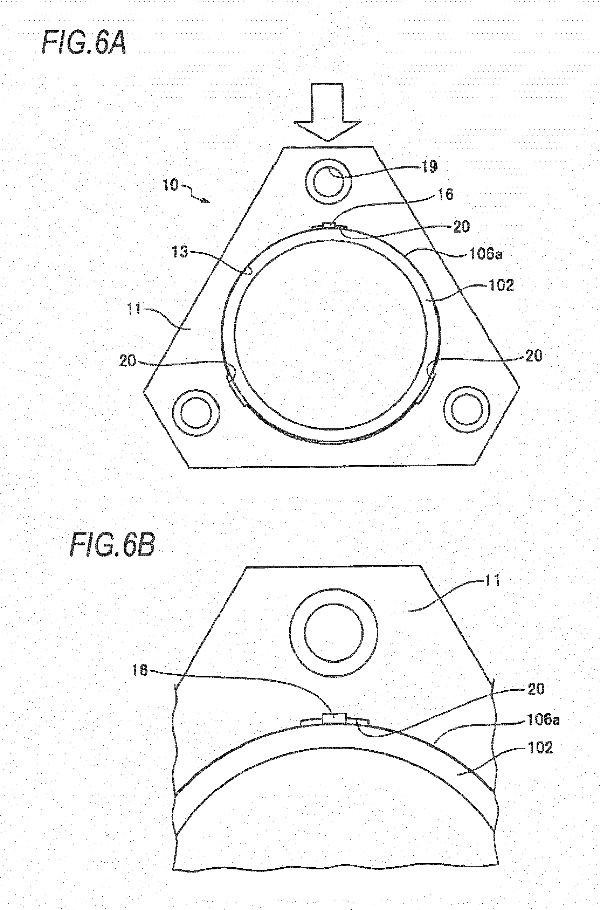

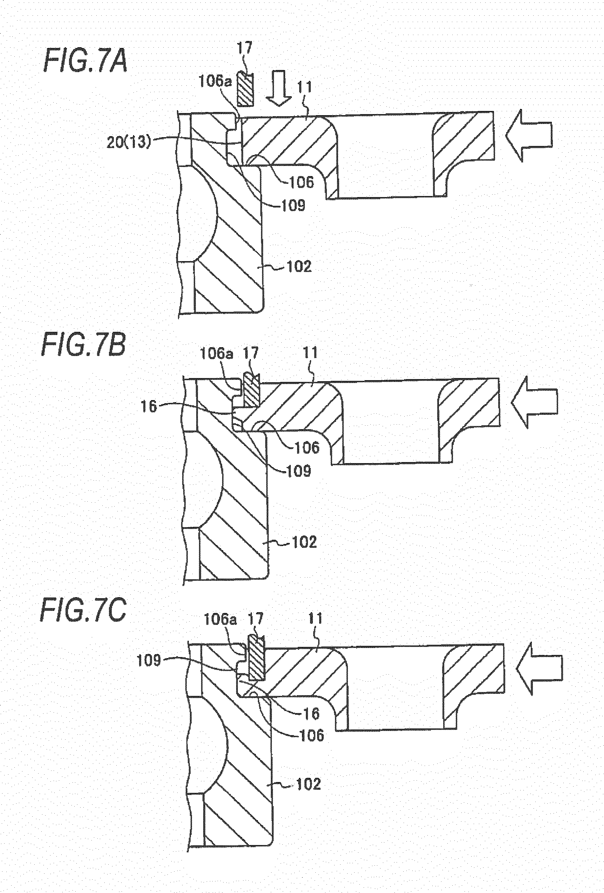

In the below, a method of manufacturing the bearing device 10 is described with reference to FIGS. 6 and 7.

In the embodiment, before fitting the retainer plate 11 with the small-diameter step portion 106 of the outer ring 102, the recess portions 20 are formed in the circular hole 13 of the retainer plate 11 but the engagement parts 16 are not formed in advance. After fitting the retainer plate 11 to the small-diameter step portion 106 of the outer ring 102, the engagement parts 16 are formed by a pressing process, so that the bearing device 10 is manufactured.

First, as shown in FIG. 6, the circular hole 13 of the retainer plate 11 is arranged around the small-diameter step portion 106 of the outer ring 102 and the retainer plate 11 is radially pushed towards the outer peripheral surface 106a of the small-diameter step portion 106 at a position where one of the plurality of engagement parts 16 is to be formed. At this time, a center of the retainer plate 11 and a center of the outer ring 102 are eccentric with each other, a gap along the radial direction between the inner peripheral surface of the retainer plate 11 and the outer peripheral surface 106a of the small-diameter step portion 106 at the position where the engagement part 16 is to be formed disappears, and a gap along the radial direction between the inner peripheral surface of the retainer plate II and the outer peripheral surface 106a of the small-diameter step portion 106 at a radially opposite position is twice as large as a gap along the radial direction between the inner peripheral surface of the retainer plate 11 and the outer peripheral surface 106a of the small-diameter step portion 106 upon manufacturing completion of the bearing device 10.

Then, as shown in FIGS. 7A and 7B, at a state where the retainer plate II is radially pushed towards the outer ring 102 at the position where the engagement part 16 is to be formed, the punch 17 is pressed to an axial side at a position overlapping with the recess portion 20, as seen from the axial direction, and a peripheral edge portion of the circular hole 13 of the retainer plate 11 is pressed by the punch 17 and the engagement part 16 is thus formed such that a tip of the engagement part 16 is contacted to the engagement groove 109. At the pressing process, the retainer plate II is radially pushed towards the outer ring 102. Accordingly, as compared to a free state of the retainer plate 11, a backside backup is obtained more at the pressing process, so that it is possible to increase a material to be processed and to improve a shape stability of projection formation.

Also, since the pressing process is performed until the tip of the engagement part 16 is contacted to the engagement groove 109, the outer ring 102 is used as a mold (a counter punch) and a protruding amount of the engagement part 16 is the same as the groove depth of the engagement groove 109, so that it is possible to stably obtain a desired protruding amount.

In the meantime, as shown in FIG. 7C, even if the punch 17 is excessively pressed and the tip of the engagement part 16 is pressed, since the outer ring 102 serves as a mold, a shape of the outer ring 102 is merely transferred to the engagement part 16. As a result, at a state where the force of pressing the retainer plate II to the outer ring 102 is removed (a state where the retainer plate 11 is free from the outer ring 102), a situation where the engagement groove 109 of the outer ring 102 and the engagement part 16 interfere with each other and the retainer plate II cannot be thus rotated relative to the outer ring 102 does not occur.

Then, by sequentially performing the above formation process of the engagement part 16 for the three engagement parts 16, the gaps B along the radial direction between the three engagement parts 16 and the engagement groove 109 are respectively equal in size to the gap A along the radial direction between the inner peripheral surface of the circular hole 13 of the retainer plate 11 and the outer peripheral surface 106a of the small-diameter step portion 106, so that the retainer plate 11 is assembled to the outer ring 102 with the center of the inner peripheral surface of the circular hole 13 and the center of the inscribed circle of each engagement part 16 being matched while the retainer plate is not separated from the outer ring and can be rotated relative to the outer ring.

As described above, according to the bearing device 10 of the embodiment, when fitting the retainer plate 11 to the small-diameter step portion 106 of the outer ring 102, since the gaps B along the radial direction between the plurality of engagement parts 16 and the engagement groove 109 are respectively equal in size to the gap A along the radial direction between the inner peripheral surface of the retainer plate 11 and the outer peripheral surface 106a of the small-diameter step portion 106, the reliability of the non-separation between the retainer plate 11 and the outer ring 102 is further secured. Also, although the simple process of the punch pressing is used, the protruding amounts of the plurality of engagement parts 16 can be made to be the same. Therefore, it is possible to form the inner diameter shape of the retainer plate II having the high assembling precision of the retainer plate II and the outer ring 102 at lower cost. Thereby, it is possible to increase the manufacturing efficiency of the bearing device 10 and to improve the productivity.

Incidentally, the structures of the inner ring, the outer ring, the rolling elements, the rolling bearing, the retainer plate, the engagement groove, the engagement parts, the small-diameter step portion and the like of the present invention are not limited to the embodiment and can be appropriately changed without departing from the gist of the present invention.

In the above embodiment, since the pressing process is performed for the plurality of engagement parts 16 one by one, the cycle time is deteriorated. However, when a progressive press is used, it is possible to secure the cycle time equivalent to the simultaneous projection processing.

For example, in the above embodiment, the engagement parts 16 are formed at the three places on the inner periphery of the retainer plate 11. However, the present invention is not limited thereto, and the engagement parts 16 may be formed at four or more places on the inner periphery of the retainer plate 11.

Also, in the above embodiment, the engagement groove 109 is formed over the entire circumference of the outer peripheral surface of the small-diameter step portion 106. However, the present invention is not limited thereto. For example, engagement grooves extending in the circumferential direction may also be formed at a plurality of places on the outer peripheral surface of the small-diameter step portion 106.

### DESCRIPTION OF REFERENCE NUMERALS

10 bearing device 11 retainer plate 13 circular hole 16 engagement part 17 punch 19 insertion hole 20 recess portion 102 outer ring
- 106: small-diameter step portion
- 106a: outer peripheral surface
- 109: engagement groove

## Claims

1. A method for manufacturing a bearing device (10) which includes a rolling bearing having a plurality of rolling elements (103) arranged between an inner ring (101) and an outer ring (102), and a retainer plate (11) configured to retain the rolling bearing to a housing and having a circular hole (13) to be fitted to an outer peripheral surface of the outer ring (102) of the rolling bearing, wherein an outer periphery of an axial end portion of the outer ring (102) is provided with a small-diameter step portion (106) to be fitted with the retainer plate (11), an engagement groove (109) extending in a circumferential direction is formed in an outer peripheral surface (106a) of the small-diameter step portion (106), a groove depth of the engagement groove (109) with respect to the outer peripheral surface (106a) of the small-diameter step portion (106) is constant over the entire circumference, and the circular hole (13) of the retainer plate (11) is provided with a plurality of engagement parts (16) protruding radially inward to be engaged to the engagement groove (109), the method comprising:
a formation process including arranging the circular hole (13) of the retainer plate (11) around the small-diameter step portion (106) of the outer ring (102),
pushing the retainer plate (11) in a radial direction towards the small-diameter step portion (106) of the outer ring (102) at a circumferential position where one of the plurality of engagement parts (16) is to be formed, and
**characterized in that**,
the plurality of engagement parts (16) are formed sequentially,
the retainer plate (11) is pushed towards the small-diameter step portion (106) of the outer ring (102) in a state, in which a center of the retainer plate (11) and a center of the outer ring (102) are eccentric with each other,
when the retainer plate (11) is pushed towards the small-diameter step portion (106) of the outer ring (102) a gap along a radial direction between an inner peripheral surface of the retainer plate (11) and an outer peripheral surface (106a) of the small-diameter step portion (106) at the position where the one of the plurality of engagement parts (16) is to be formed disappears, and
at a time when the retainer plate (11) is pushed towards the outer ring (102) in a radial direction, a peripheral edge portion of the circular hole (13) of the retainer plate (11) is pressed with a punch (17) in an axial direction to form the one of the engagement parts (16), such that a tip of the engagement part (16) is in contact with the engagement groove (109)

2. The method for manufacturing a bearing device (10) according to claim 1,
wherein an inner peripheral surface of the circular hole (13) is formed with a recess portion extending over both circumferential sides of the circumferential position where each engagement part (16) is formed.

3. A bearing device (10) comprising:
a rolling bearing including a plurality of rolling elements (103) arranged between an inner ring (101) and an outer ring (102); and
a retainer plate (11) configured to retain the rolling bearing to a housing and having a circular hole (13) to be fitted to an outer peripheral surface of the outer ring (102) of the rolling bearing,
wherein an outer periphery of an axial end portion of the outer ring (102) is provided with a small-diameter step portion (106) to be fitted with the retainer plate (11),
wherein an engagement groove (109) extending in a circumferential direction is formed in an outer peripheral surface (106a) of the small-diameter step portion (106),
wherein a groove depth of the engagement groove (109) with respect to the outer peripheral surface (106a) of the small-diameter step portion (106) is constant over the entire circumference,
wherein the circular hole (13) of the retainer plate (11) is provided with a plurality of engagement parts (16) protruding radially inward and to be engaged to the engagement groove (109), and
wherein gaps along a radial direction between the plurality of engagement parts (16) and the engagement groove (109) are respectively equal in size to a gap along the radial direction between an inner peripheral surface of the circular hole (13) of the retainer plate (11) and the outer peripheral surface (106a) of the small-diameter step portion (106), **characterized in that**
a center of the inner peripheral surface of the circular hole (13) and a center of an inscribed circle of each engagement part (16) coincide with each other.

## Patentansprüche

1. Verfahren zum Herstellen einer Lagerungsvorrichtung (10), die ein Wälzlager mit einer Vielzahl von Wälzkörpern (103), die zwischen einem Innenring (101) und einem Außenring (102) angeordnet sind, sowie eine Halteplatte (11) enthält, die so eingerichtet ist, dass sie das Wälzlager an einem Gehäuse hält, und die ein kreisförmiges Loch (13) aufweist, das auf eine Außenumfangsfläche des Außenrings (102) des Wälzlagers aufgepasst wird, wobei ein Außenumfang eines axialen Endabschnitts des Außenrings (102) mit einem Absatz-Abschnitt (106) mit kleinem Durchmesser versehen ist, der mit der Halteplatte (11) in Passung gebracht wird, eine Eingriffs-Nut (109), die in einer Umfangsrichtung verläuft, an einer Außenumfangsfläche (106a) des Absatz-Abschnitts (106) mit kleinem Durchmesser ausgebildet ist, eine Nut-Tiefe der Eingriffs-Nut (109) in Bezug auf die Außenumfangsfläche (106a) des Absatz-Abschnitts (106) mit kleinem Durchmesser über den gesamten Umfang konstant ist und das kreisförmige Loch (13) der Halteplatte (11) mit einer Vielzahl von Eingriffs-Teilen (16) versehen ist, die radial nach innen vorstehen und mit der Eingriffs-Nut (109) in Eingriff gebracht werden, wobei das Verfahren umfasst:
einen Ausbildungs-Prozess, der einschließt, dass das kreisförmige Loch (13) der Halteplatte (11) um den Absatz-Abschnitt (106) mit kleinem Durchmesser des Außenrings (102) angeordnet wird,
die Halteplatte (11) in einer radialen Richtung auf den Absatz-Abschnitt (106) mit kleinem Durchmesser des Außenrings (102) an eine Umfangsposition gedrückt wird, an der einer der Vielzahl von Eingriffs-Teilen (16) ausgebildet werden soll, und
**dadurch gekennzeichnet, dass**
die Vielzahl von Eingriffs-Teilen (16) aufeinanderfolgend ausgebildet werden,
die Halteplatte (11) in einem Zustand auf den Absatz-Abschnitt (106) mit kleinem Durchmesser des Außenrings (102) gedrückt wird, in dem eine Mitte der Halteplatte (11) und eine Mitte des Außenrings (102) exzentrisch zueinander sind,
wenn die Halteplatte (11) auf den Absatz-Abschnitt (106) mit kleinem Durchmesser des Außenrings (102) zu gedrückt wird, ein Zwischenraum in einer radialen Richtung zwischen einer Innenumfangsfläche der Halteplatte (11) und einer Außenumfangsfläche (106a) des Absatz-Abschnitts (106) mit kleinem Durchmesser an der Position, an der einer der Vielzahl von Eingriffs-Teilen (16) ausgebildet werden soll, verschwindet, und
zu einem Zeitpunkt, zu dem die Halteplatte (11) in einer radialen Richtung auf den Außenring (102) zu gedrückt wird, ein Umfangsrand-Abschnitt des kreisförmigen Lochs (13) der Halteplatte (11) mit einem Stanzwerkzeug (17) in einer axialen Richtung gepresst wird, um das eine der Eingriffs-Teile (16) so auszubilden, dass ein vorderes Ende des Eingriffs-Teils (16) in Kontakt mit der Eingriffs-Nut (109) ist.

2. Verfahren zum Herstellen einer Lagerungsvorrichtung (10) nach Anspruch 1,
wobei eine Innenumfangsfläche des kreisförmigen Lochs (13) mit einem Vertiefungs-Abschnitt versehen ist, der sich über beide Umfangs-Seiten der Umfangs-Position erstreckt, an der das Eingriffs-Teil (16) ausgebildet ist.

3. Lagerungsvorrichtung (10), die umfasst:
ein Wälzlager, das eine Vielzahl von Wälzkörpern (103) enthält, die zwischen einem Innenring (101) und einem Außenring (102) angeordnet sind; sowie
eine Halteplatte (11), die so eingerichtet ist, dass sie das Wälzlager an einem Gehäuse hält, und die ein kreisförmiges Loch (13) aufweist, das auf eine Außenumfangsfläche des Außenrings (102) des Wälzlagers aufgepasst wird,
wobei ein Außenumfang eines axialen Endabschnitts des Außenrings (102) mit einem Absatz-Abschnitt (106) mit kleinem Durchmesser versehen ist, der mit der Halteplatte (11) in Passung gebracht wird,
eine Eingriffsnut (109), die in einer Umfangsrichtung verläuft, an einer Außenumfangsfläche (106a) des Absatz-Abschnitts (106) mit kleinem Durchmesser ausgebildet ist,
eine Nut-Tiefe der Eingriffs-Nut (109) in Bezug auf die Außenumfangsfläche (106a) des Absatz-Abschnitts (106) mit kleinem Durchmesser über den gesamten Umfang konstant ist,
das kreisförmige Loch (13) der Halteplatte (11) mit einer Vielzahl von Eingriffs-Teilen (16) versehen ist, die radial nach innen vorstehen und mit der Eingriffs-Nut (109) in Eingriff gebracht werden, und
Zwischenräume zwischen der Vielzahl von Eingriffs-Teilen (16) und der Eingriffs-Nut (109) in einer radialen Richtung jeweils die gleiche Größe haben wie ein Zwischenraum zwischen einer Innenumfangsfläche des kreisförmigen Lochs (13) der Halteplatte (11) und der Außenumfangsfläche (106a) des Absatz-Abschnitts (106) mit kleinem Durchmesser in der radialen Richtung,
**dadurch gekennzeichnet, dass**
eine Mitte der Innenumfangsfläche des kreisförmigen Lochs (13) und eine Mitte eines eingeschriebenen Kreises jedes Eingriffs-Teils (16) deckungsgleich miteinander sind.

## Revendications

1. Procédé de fabrication d'un dispositif de palier (10) qui inclut un roulement à rouleaux comportant une pluralité d'éléments roulants (103) agencés entre une bague interne (101) et une bague externe (102), et une plaque de retenue (11) configurée pour retenir le roulement à rouleaux sur une enveloppe et comportant un trou circulaire (13) à ajuster à la surface périphérique externe de la bague externe (102) du roulement à rouleaux, la périphérie externe de la partie terminale axiale de la bague externe (102) étant munie d'une partie formant créneau (106) de petit diamètre à ajuster avec la plaque de retenue (11), une rainure de mise en prise (109) s'étendant dans la direction circonférentielle est formée dans la surface périphérique externe (106a) de la partie formant créneau (106) de petit diamètre, la profondeur de rainure de la rainure de mise en prise (109), par rapport à la surface périphérique externe (106a) de la partie formant créneau (106) de petit diamètre, étant constante sur toute la circonférence, et le trou circulaire (13) de la plaque de retenue (11) étant muni d'une pluralité de composants de mise en prise (16) radialement en saillie vers l'intérieur et à engrener avec la rainure de mise en prise (109), le procédé comprenant :
un processus de formation incluant l'agencement du trou circulaire (13) de la plaque de retenue (11) autour de la partie formant créneau (106) de petit diamètre de la bague externe (102),
la poussée de la plaque de retenue (11) dans une direction radiale vers la partie formant créneau (106) de petit diamètre de la bague externe (102) au niveau d'une position circonférentielle où doit être formé l'un de la pluralité de composants de mise en prise (16), et
**caractérisé en ce que**
les différents composants de mise en prise (16) sont formés en séquence,
la plaque de retenue (11) est poussée vers la partie formant créneau (106) de petit diamètre de la bague externe (102) de sorte à ce que le centre de la plaque de retenue (11) et le centre de la bague externe (102) soient excentrés l'un par rapport à l'autre,
lorsque la plaque de retenue (11) est poussée vers la partie formant créneau (106) de petit diamètre de la bague externe (102), un interstice disparaît, ménagé le long de la direction radiale entre la surface périphérique interne de la plaque de retenue (11) et la surface périphérique externe (106a) de la partie formant créneau (106) de petit diamètre, au niveau de la position où le composant appartenant à la pluralité de composants de mise en prise (16) doit être formé, et
au moment où la plaque de retenue (11)est poussée vers la bague externe (102) dans la direction radiale, la bordure périphérique du trou circulaire (13) de la plaque de retenue (11) est pressée avec un poinçon (17) dans la direction axiale pour former le composant appartenant aux composants de mise en prise (16) de sorte à ce que la pointe du composant de mise en prise (16) soit en contact avec la rainure de mise en prise (109).

2. Procédé de fabrication d'un dispositif de palier (10) selon la revendication 1,
dans lequel la surface périphérique interne du trou circulaire (13) est formée d'une partie en creux s'étendant sur les deux côtés circonférentiels de la position circonférentielle où est formé le composant de mise en prise (16) .

3. Dispositif de palier (10) comprenant :
un roulement à rouleaux incluant une pluralité d'éléments roulants (103) agencés entre une bague interne (101) et une bague externe (102), et
une plaque de retenue (11) configurée pour retenir le roulement à rouleaux sur une enveloppe et comportant un trou circulaire (13) à ajuster sur la surface périphérique externe de la bague externe (102) du roulement à rouleaux,
dans lequel la périphérie externe de la partie terminale axiale de la bague externe (102) est munie d'une partie formant créneau (106) de petit diamètre à ajuster avec la plaque de retenue (11),
dans lequel une rainure de mise en prise (109) s'étendant dans la direction circonférentielle est formée dans la surface périphérique externe (106a) de la partie formant créneau (106) de petit diamètre,
dans lequel la profondeur de rainure de la rainure de mise en prise (109), par rapport à la surface périphérique externe (106a) de la partie formant créneau (106) de petit diamètre, est constante sur toute la circonférence,
dans lequel le trou circulaire (13) de la plaque de retenue (11) est muni d'une pluralité de composants de mise en prise (16) radialement en saillie vers l'intérieur et à engrener avec la rainure de mise en prise (109), et
dans lequel des interstices le long de la direction radiale entre la pluralité de composants de mise en prise (16) et la rainure de mise en prise (109) sont respectivement de taille égale à l'interstice ménagé le long de la direction radiale entre la surface périphérique interne du trou circulaire (13) de la plaque de retenue (11) et la surface périphérique externe (106a) de la partie formant créneau (106) de petit diamètre,
**caractérisé en ce que**
le centre de la surface périphérique interne du trou circulaire (13) et le centre du cercle inscrit de chaque composant de mise en prise (16) coïncident l'un avec l'autre.
